# EUROPEAN PATENT APPLICATION

(11) **EP 3 098 725 A1**
(43) Date of publication of application: **30.11.2016**
(21) Application number: 14878964.7
(22) Date of filing: 16.09.2014
(51) Int. Cl.: G06F 17/30

(54) **AUDIO-BASED DATA LABEL DISTRIBUTION SYSTEM AND METHOD**

(30) Priority: 20.01.2014 CN 201410026089
(71) Applicant: Qu, Lidong, Beijing 100088 (CN)
(72) Inventor: Qu, Lidong, Beijing 100088 (CN)
(74) Representative: Szabo, Zsolt
(86) International application number: PCT/CN2014/086606
(87) International publication number: WO 2015/106576

(57) **Abstract**

The present invention relates to a VF-based data tag release system and a VF-based data tag release method, and belongs to the technical field of computer application. The system comprises a VF processing equipment, a VF play equipment, a user terminal and a data tag server. The method associates a data tag or data tags corresponding to a piece of or pieces of information that need to be transmitted to a piece of or pieces of VF data through the VF processing equipment, then plays the associated VF data as a piece of background music through the VF play equipment, after a user terminal identifies the piece of background music, the user terminal obtains data such as product information corresponding to the data tag or the data tags via a network. With the system and the method of the present invention, only if the associated VF data are played as a piece of background music, it enables the audience to obtain the product information intuitively, and at the same time does not prevent the audience from appreciating the performance; or enables the customer to obtain a lot of commodity information quickly, moreover, in the present invention, the VF-based data tag release system has a simple structure and a wide application range, the realization mode of the method is simple and convenient, and the realization cost is relatively low.

## Description

### Field of Technology

The present invention relates to the technical field of computer application, especially to the computer technical field of processing VF (voice frequency), in particular to a VF-based data tag release system and a VF-based data tag release method.

### Description of Related Arts

In an occasion such as a fashion release show or a product release meeting, when a model wearing a displayed fashion performs onstage or a product is displayed, each audience usually hopes that he/she can know more detailed information of the fashion or the product, but if it is introduced through a background commentary, it is not intuitive enough and is also not specific enough to the audience, and the audience is difficult to master all information of the product; and if it is displayed through a display screen, each user is also unable to appreciate attentively the stage performance or the product demonstration, there also have shortcomings. Therefore, how to let the audience obtain information of a product such as a fashion completely and intuitively, and at the same time without preventing the audience from appreciating the performance or the demonstration has become an urgent problem that needs to be settled.

In addition, in a place such as a hypermarket or a shopping mall, each brand shop hopes that passing customers can pay more attention to the products of its own shop, and at the same time complete product information can be told as can as possible to the customers, this is a great challenge for sales personnel, although it can be achieved by distributing promotional materials or introducing directly by the sales personnel, the information amount transmitted by these information transmitting methods is very limited, and the sales effect is also not good. Therefore there also needs a method to solve the problem of how to transmit a lot of information timely and quickly to the customers.

Data tag refers to tagged data information that can be read through a particular device, including NFC, RFID, bar code, two-dimensional code, and so on, in the present application, it mainly refers to bar code and two-dimensional code graphics and so on that can be transmitted through a network.

### Summary of the Invention

In order to overcome the above mentioned shortcomings of the prior art, one object of the present invention is to provide a VF-based data tag release system and a VF-based data tag release method, wherein a data tag or data tags corresponding to a piece of or pieces of information that need to be transmitted are associated to a piece of or pieces of VF data, the associated VF data can be a piece of background music itself, or a high VF or high VFs that can not be heard by human ears in the piece of background music, after an audience or a customer identifies the piece of background music through a device such as a mobile phone, he/she can obtains the specific transmitted information via a network, so as to make the audience obtain the product information intuitively, and at the same time not to prevent the audience from appreciating the performance; meanwhile a lot of commodity information can be transmitted quickly to the customer.

In order to realize the above object, in a first aspect of the present invention, a VF-based data tag release system is provided, and has the following structure:
The system comprises a VF processing equipment, a VF play equipment, a user terminal and a data tag server.

Wherein, the VF processing equipment is used to define VF data according to a preset rule or preset rules, associate a part, some parts or all of the VF data to a piece of or pieces of preset data tag information, to form associated VF data, the VF processing equipment is further used to receive user terminal VF data, and search a piece of or pieces of data tag information associated to the received user terminal VF data according to the received user terminal VF data; the VF play equipment is connected with the VF processing equipment, and is used to read the associated VF data and output the associated VF data in a sound wave form; the user terminal includes a microphone, a sound wave digitalizing processor connected with the microphone and a network module connected with the sound wave digitalizing processor, the microphone is used to receive the sound wave output from the VF play equipment, the sound wave digitalizing processor is used to convert the sound wave received by the microphone into digitalized user terminal VF data, the network module is connected with the VF processing equipment via a network, and sends the user terminal VF data to the VF processing equipment; the user terminal is further used to obtain data information corresponding to a data tag or data tags via the network according to the data tag or the data tags obtained; the data tag server is connected with the VF processing equipment and the user terminal via the network respectively, and is used to send the corresponding data tag or the corresponding data tags to the user terminal according to the piece of or the pieces of data tag information received from the VF processing equipment.

In the VF-based data tag release system, the VF processing equipment includes a high VF processor and a VF mixing processor.

Wherein, the high VF processor is used to associate a piece of or pieces of high VF data that can not be heard by human ears to the piece of or the pieces of preset data tag information, the high VF processor is further used to receive the user terminal VF data, and search the piece of or the pieces of data tag information associated to the received user terminal VF data according to the received user terminal VF data; the VF mixing processor is connected with the high VF processor, stores VF data that need to be played and can be heard by human ears, and is used to mix the piece of or the pieces of high VF data that can not be heard by human ears with the VF data that need to be played and can be heard by human ears, to form the associated VF data.

In the VF-based data tag release system, the VF range of the high VF data that can not be heard by human ears is 16kHz to 20kHz.

In the VF-based data tag release system, the VFs of the pieces of high VF data that can not be heard by human ears are different.

In the VF-based data tag release system, the VF processing equipment includes: a VF segmenting processor, storing VF data that needs to be played, and used to segment the VF data and associate each segment of the VF data to the piece of or the pieces of preset data tag information, to form the associated VF data, the VF segmenting processor is further used to receive the user terminal VF data, and search the piece of or the pieces of data tag information associated to the received user terminal VF data according to the received user terminal VF data.

In the VF-based data tag release system, the VF segmenting processor segments the VF data according to the syllable(s) of the VF data.

The VF-based data tag release system further comprises a wireless network access equipment, the wireless network access equipment is connected with the VF processing equipment, the user terminal and the data tag server through a wireless signal respectively.

In the VF-based data tag release system, the wireless network access equipment is a 2G/3G/4G wireless signal transceiver equipment, and the wireless signal is a 2G/3G/4G wireless signal; or the wireless network access equipment is a wireless router, and the wireless signal is a WIFI signal.

In the VF-based data tag release system, the wireless network access equipment has an equipment identifier indicating its position, the wireless network access equipment is used to send the user terminal VF data and the equipment identifier to the VF processing equipment after receiving the user terminal VF data; the VF processing equipment further includes an equipment identifier parsing server, used to confirm whether the user terminal sending the user terminal VF data is connected with the wireless network access equipment connected with the VF processing equipment or not by parsing the equipment identifier, so as to determine the position of the user terminal, if yes, the VF processing equipment searches the piece of or the pieces of data tag information associated to the received user terminal VF data according to the received user terminal VF data.

In the VF-based data tag release system, the VF play equipment includes a power amplifier and an audible device, the input end of the power amplifier is connected with the output end of the VF processing equipment, the output end of the power amplifier is connected with the input end of the audible device.

In a second aspect of the present invention, a VF-based data tag release method implemented by using the system is provided, and comprises the following steps:
(1) defining VF data according to a preset rule or preset rules, and associating a part, some parts or all of the VF data to a piece of or pieces of preset data tag information through the VF processing equipment, to form associated VF data;
(2) reading the associated VF data from the VF processing equipment, and outputting the associated VF data in a sound wave form through the VF play equipment;
(3) receiving the sound wave output from the VF play equipment through the microphone, and converting the sound wave received by the microphone into digitalized user terminal VF data through the sound wave digitalizing processor in the user terminal;
(4) sending the user terminal VF data to the VF processing equipment through the network module in the user terminal;
(5) searching a piece of or pieces of data tag information associated to the received user terminal VF data according to the received user terminal VF data, and sending the piece of or the pieces of data tag information to the data tag server through the VF processing equipment;
(6) sending a corresponding data tag or corresponding data tags to the user terminal through the data tag server according to the piece of or the pieces of data tag information received from the VF processing equipment;
(7) obtaining data information corresponding to the data tag or the data tags from a server corresponding to the data tag or the data tags via the network through the user terminal according to the data tag or the data tags obtained.

In the VF-based data tag release method, the VF processing equipment includes a high VF processor and a VF mixing processor, and the step (1) includes the following steps in details:
(11-1) associating a piece of or pieces of high VF data that can not be heard by human ears to the piece of or the pieces of preset data tag information through the high VF processor;
(11-2) mixing the piece of or the pieces of high VF data that can not be heard by human ears with the VF data that need to be played and can be heard by human ears through the VF mixing processor, to form the associated VF data.

In the VF-based data tag release method, the step (5) comprises the following step in details:
(51) searching the piece of or the pieces of data tag information associated to the received user terminal VF data according to the received user terminal VF data, and sending the piece of or the pieces of data tag information to the data tag server through the high VF processor.

In the VF-based data tag release method, the VF range of the high VF data that can not be heard by human ears is 16kHz to 20kHz.

In the VF-based data tag release method, the VFs of the pieces of high VF data that can not be heard by human ears are different.

In the VF-based data tag release method, the VF processing equipment includes a VF segmenting processor, and the step (1) includes the following step in details:
(12) segmenting the VF data that need to be played, and associating each segment of the VF data to the piece of or the pieces of preset data tag information through the VF segmenting processor, to form the associated VF data.

In the VF-based data tag release method, the step (5) comprises the following step in details:
(52) searching the piece of or the pieces of data tag information associated to the received user terminal VF data according to the received user terminal VF data, and sending the piece of or the pieces of data tag information to the data tag server through the VF segmenting processor.

In the VF-based data tag release method, the VF segmenting processor segments the VF data according to the syllable(s) of the VF data.

In the VF-based data tag release method, the system further comprises a wireless network access equipment, the wireless network access equipment is connected with the VF processing equipment, the user terminal and the data tag server through a wireless signal respectively, and the step (4) includes the following step in details:
(41) sending the user terminal VF data to the VF processing equipment via the wireless network access equipment through the network module in the user terminal;
and the step (6) includes the following step in details:
(61) sending the corresponding data tag or the corresponding data tags to the user terminal via the wireless network access equipment through the data tag server according to the piece of or the pieces of data tag information received from the VF processing equipment.

In the VF-based data tag release method, the wireless network access equipment has an equipment identifier indicating its position, the VF processing equipment further includes an equipment identifier parsing server, and the step (41) includes the following steps in details:
(41-1) sending the user terminal VF data and the equipment identifier to the VF processing equipment through the wireless network access equipment after receiving the user terminal VF data;
(41-2) judging whether the equipment identifier received is same to the equipment identifier of the wireless network access equipment connected with the VF processing equipment or not through the equipment identifier parsing server of the VF processing equipment, if yes, going to the step (5), if not, exiting the method.

In the VF-based data tag release method, the VF play equipment includes a power amplifier and an audible device, and the step (2) includes the following steps in details:
(2-1) reading the associated VF data from the VF processing equipment, and performing a power amplification process to the associated VF data through the power amplifier;
(2-2) outputting the associated VF data to which the power amplification process is performed in the sound wave form through the audible device.

In the VF-based data tag release system and the VF-based data tag release method of the present invention, for the system comprises a VF processing equipment, a VF play equipment, a user terminal and a data tag server, a data tag or data tags corresponding to a piece of or pieces of information that need to be transmitted can be associated to a piece of or pieces of VF data through the VF processing equipment, then the associated VF data are played as a piece of background music through the VF play equipment, after a user identifies the piece of background music through the user terminal such as a mobile phone or a tablet PC, the user terminal VF data are sent to the VF processing equipment through a network, after the VF processing equipment searches a piece of or pieces of corresponding data tag information, the data tag server sends a data tag or data tags to the user terminal, the user terminal can further obtain data such as the product information corresponding to the data tag or the data tags. With the system and the method of the present invention, only if the associated VF data are played as a piece of background music, it enables the audience to obtain the product information intuitively, and at the same time does not prevent the audience from appreciating the performance; or enables the customer to obtain a lot of commodity information quickly, moreover, in the present invention, the VF-based data tag release system has a simple structure and a wide application range, the realization mode of the method is simple and convenient, and the realization cost is relatively low.

### Brief Description of the Drawings

Fig. 1 shows a schematic view of the structure of the VF-based data tag release system of the present invention.
Fig. 2 shows a schematic view of the steps of the VF-based data tag release method of the present invention.
Fig. 3 shows a schematic view of the VF-based data tag release system and the VF-based data tag release method of the present invention implemented in a manner of associating a piece of or pieces of high VF data in practical applications.
Fig. 4 shows a schematic view of the VF-based data tag release system and the VF-based data tag release method of the present invention implemented in a manner of segmenting and defining a piece of background music in practical applications.

### Detailed Description of the Preferred Embodiment

In order to understand the technical content of the present invention clearly, the present invention is further exemplified by reference to the following examples.

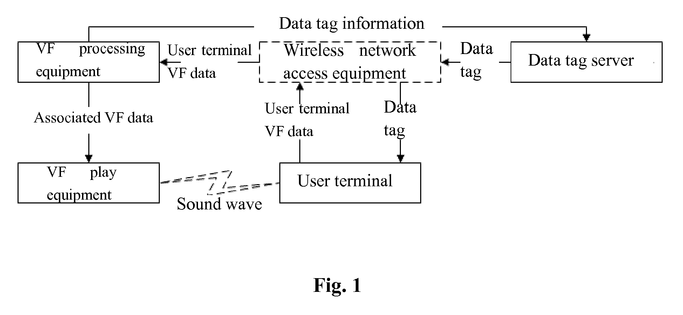

Please refer to Fig. 1, Fig. 1 shows a schematic view of the structure of the VF-based data tag release system of the present invention.

In one embodiment, the VF-based data tag release system comprises a VF processing equipment, a VF play equipment, a user terminal and a data tag server.

Wherein, the VF processing equipment is used to define VF data according to a preset rule or preset rules, associate a part, some parts or all of the VF data to a piece of or pieces of preset data tag information, to form associated VF data, the VF processing equipment is further used to receive user terminal VF data, and search a piece of or pieces of data tag information associated to the received user terminal VF data according to the received user terminal VF data; the VF play equipment is connected with the VF processing equipment, and is used to read the associated VF data and output the associated VF data in a sound wave form; the user terminal includes a microphone, a sound wave digitalizing processor connected with the microphone and a network module connected with the sound wave digitalizing processor, the microphone is used to receive the sound wave output from the VF play equipment, the sound wave digitalizing processor is used to convert the sound wave received by the microphone into digitalized user terminal VF data, the network module is connected with the VF processing equipment via a network, and sends the user terminal VF data to the VF processing equipment; the user terminal is further used to obtain data information corresponding to a data tag or data tags via the network according to the data tag or the data tags obtained; the data tag server is connected with the VF processing equipment and the user terminal via the network respectively, and is used to send the corresponding data tag or the corresponding data tags to the user terminal according to the piece of or the pieces of data tag information received from the VF processing equipment.

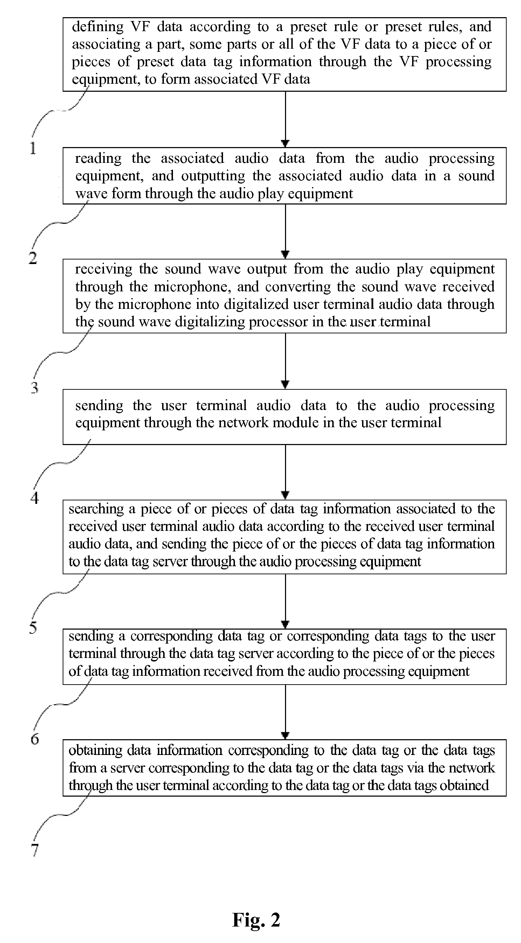

A VF-based data tag release method implemented by using the system described in this embodiment, as shown in Fig. 2, comprises the following steps:
(1) defining VF data according to a preset rule or preset rules, and associating a part, some parts or all of the VF data to a piece of or pieces of preset data tag information through the VF processing equipment, to form associated VF data;
(2) reading the associated VF data from the VF processing equipment, and outputting the associated VF data in a sound wave form through the VF play equipment;
(3) receiving the sound wave output from the VF play equipment through the microphone, and converting the sound wave received by the microphone into digitalized user terminal VF data through the sound wave digitalizing processor in the user terminal;
(4) sending the user terminal VF data to the VF processing equipment through the network module in the user terminal;
(5) searching a piece of or pieces of data tag information associated to the received user terminal VF data according to the received user terminal VF data, and sending the piece of or the pieces of data tag information to the data tag server through the VF processing equipment;
(6) sending a corresponding data tag or corresponding data tags to the user terminal through the data tag server according to the piece of or the pieces of data tag information received from the VF processing equipment;
(7) obtaining data information corresponding to the data tag or the data tags from a server corresponding to the data tag or the data tags via the network through the user terminal according to the data tag or the data tags obtained.

In a relatively preferred embodiment, the VF processing equipment includes a high VF processor and a VF mixing processor.

Wherein, the high VF processor is used to associate a piece of or pieces of high VF data that can not be heard by human ears to the piece of or the pieces of preset data tag information, the high VF processor is further used to receive the user terminal VF data, and search the piece of or the pieces of data tag information associated to the received user terminal VF data according to the received user terminal VF data; the VF mixing processor is connected with the high VF processor, stores VF data that need to be played and can be heard by human ears, and is used to mix the piece of or the pieces of high VF data that can not be heard by human ears with the VF data that need to be played and can be heard by human ears, to form the associated VF data. The VF range of the high VF data that can not be heard by human ears is 16kHz to 20kHz. When there are pieces of high VF data, the VFs of the pieces of high VF data that can not be heard by human ears are different.

In the VF-based data tag release method implemented by using the system described in this relatively preferred embodiment, the step (1) includes the following steps in details:
(11-1) associating a piece of or pieces of high VF data that can not be heard by human ears to the piece of or the pieces of preset data tag information through the high frequency VF processor;
(11-2) mixing the piece of or the pieces of high VF data that can not be heard by human ears with the VF data that need to be played and can be heard by human ears through the VF mixing processor, to form the associated VF data.
and the step (5) comprises the following step in details:
(51) searching the piece of or the pieces of data tag information associated to the received user terminal VF data according to the received user terminal VF data, and sending the piece of or the pieces of data tag information to the data tag server through the high frequency VF processor.

In another relatively preferred embodiment, the VF processing equipment includes a VF segmenting processor, storing VF data that needs to be played, and used to segment the VF data and associate each segment of the VF data to the piece of or the pieces of preset data tag information, to form the associated VF data, the VF segmenting processor is further used to receive the user terminal VF data, and search the piece of or the pieces of data tag information associated to the received user terminal VF data according to the received user terminal VF data. Preferably, the VF segmenting processor segments the VF data according to the syllable(s) of the VF data.

In the VF-based data tag release method implemented by using the system described in this relatively preferred embodiment, the step (1) includes the following step in details:
(12) segmenting the VF data that need to be played, and associating each segment of the VF data to the piece of or the pieces of preset data tag information through the VF segmenting processor, to form the associated VF data.
and the step (5) comprises the following step in details:
(52) searching the piece of or the pieces of data tag information associated to the received user terminal VF data according to the received user terminal VF data, and sending the piece of or the pieces of data tag information to the data tag server through the VF segmenting processor.

In a further preferred embodiment, the VF-based data tag release system further comprises a wireless network access equipment, the wireless network access equipment is connected with the VF processing equipment, the user terminal and the data tag server through a wireless signal respectively. The wireless network access equipment can be a 2G/3G/4G wireless signal transceiver equipment, correspondingly the wireless signal is a 2G/3G/4G wireless signal. The wireless network access equipment also can be a wireless router, correspondingly the wireless signal is a WIFI signal.

In the VF-based data tag release method implemented by using the system described in this further preferred embodiment, the step (4) includes the following step in details:
(41) sending the user terminal VF data to the VF processing equipment via the wireless network access equipment through the network module in the user terminal;
the step (6) includes the following step in details:
(61) sending the corresponding data tag or the corresponding data tags to the user terminal via the wireless network access equipment through the data tag server according to the piece of or the pieces of data tag information received from the VF processing equipment.

In a more preferred embodiment, the wireless network access equipment has an equipment identifier (such as: a SSID of a wireless router) indicating its position, the wireless network access equipment is used to send the user terminal VF data and the equipment identifier to the VF processing equipment after receiving the user terminal VF data;
and the VF processing equipment further includes an equipment identifier parsing server, used to confirm whether the user terminal sending the user terminal VF data is connected with the wireless network access equipment connected with the VF processing equipment or not by parsing the equipment identifier, so as to determine the position of the user terminal, if yes, the VF processing equipment searches the piece of or the pieces of data tag information associated to the received user terminal VF data according to the received user terminal VF data.

In the VF-based data tag release method implemented by using the system described in this more preferred embodiment, the step (41) includes the following steps in details:
(41-1) sending the user terminal VF data and the equipment identifier to the VF processing equipment through the wireless network access equipment after receiving the user terminal VF data;
(41-2) judging whether the equipment identifier received is same to the equipment identifier of the wireless network access equipment connected with the VF processing equipment or not through the equipment identifier parsing server of the VF processing equipment, if yes, going to the step (5), if not, exiting the method.

In an alternative embodiment, the VF play equipment includes a power amplifier and an audible device, the input end of the power amplifier is connected with the output end of the VF processing equipment, the output end of the power amplifier is connected with the input end of the audible device.

In the VF-based data tag release method implemented by using the system described in this alternative embodiment, the step (2) includes the following steps in details:
(2-1) reading the associated VF data from the VF processing equipment, and performing a power amplification process to the associated VF data through the power amplifier;
(2-2) outputting the associated VF data to which the power amplification process is performed in the sound wave form through the audible device.

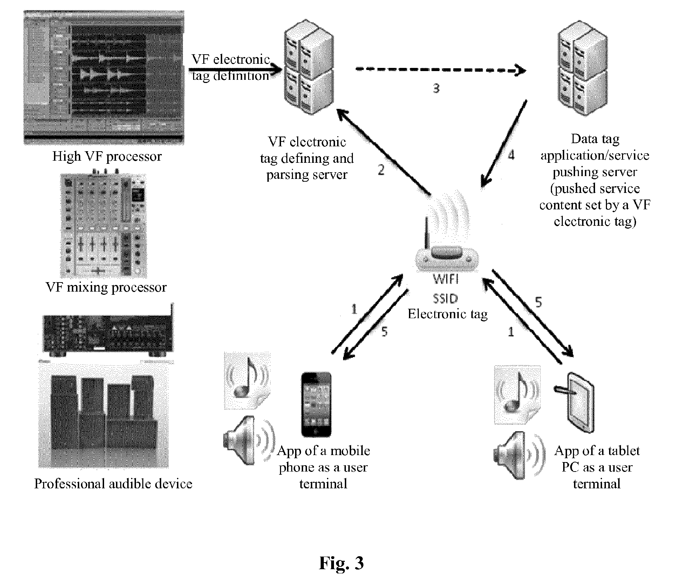

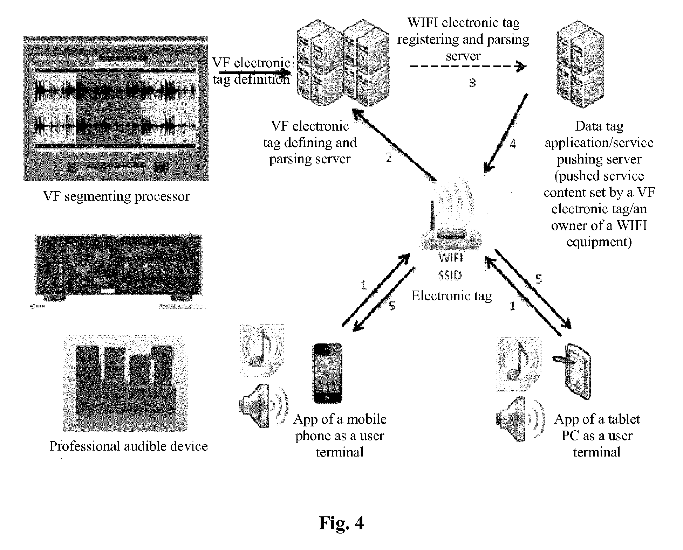

In the practical applications, the present invention can generally include two technical solutions as shown in Fig. 3 and Fig.4.

Solution 1: as shown in Fig. 3, a professional VF processing equipment and a professional VF mixing equipment are used, 16 kHz ∼ 20 kHz more than the normal human ear reception range are regarded as a VF electronic tag, in the condition that an audience/a customer appreciating a piece of music/a song/a sound effect is not affected, a data tag corresponding to the VF electronic tag is pushed into an APP of an intelligent terminal of the audience/the customer via a WIFI network, to show/display relevant information.

Studies show that, the high VF played by a professional audible device can reach 5000 ∼ 20kHz. The VF reception range of a mouthpiece/a microphone of an intelligent terminal, such as a mobile phone, a tablet PC, etc. is 20Hz ∼ 20kHz.

In theory, the human ear hearing range is 20Hz ∼ 20kHz, but in the real life, the range that the human ear can hear is 90Hz ∼ 15.1kHz. With the increase of the age and for other reasons, the actual hearing range of the human ear is far less than 90Hz ∼ 15.1kHz (mainly in the high frequency). With the increase of the age, it decreases significantly. The human hearing range is determined by the physiological structure.

VFs of 16 kHz ∼ 20 kHz more than the human ear reception range in the real life are used to be regarded as an electronic tag, with the professional VF processing equipment and the professional VF mixing equipment, the VFs between 16 kHz ∼ 20 kHz in the VF played originally are deleted, and the VFs of 16 kHz ∼ 20 kHz defined are added as an electronic tag into the existing piece of music/the existing song/the existing sound effect through the professional VF mixing equipment, and then played through the professional audible device.

A special VF electronic tag corresponding to data tag defining and parsing server is used. At the same time, the intelligent terminal runs a special App, to obtain the VF electronic tag of 16kHz∼20kHz by using the mouthpiece/the microphone of the intelligent terminal. After obtaining the VF electronic tag through the mouthpiece, the App of the intelligent terminal connects to the special server through a WIFI network to parse the VF electronic tag, and obtain the data tag corresponding to the electronic tag, to achieve the release and the application of the data tag, and make the user obtain the relevant information.

Solution 2: as shown in Fig. 4, the existing piece of music/the existing song/ the existing sound effect is segmented, each segment corresponds to a corresponding VF electronic tag. Places/positions are determined via WIFI networks, the VF electronic tags and the places/the positions are combined, a corresponding data tag or corresponding data tags are pushed into an App of an intelligent terminal of an audience/a customer via one of the WIFI networks, to show/display relevant information.

In the above solution, the positions/the places are determined mainly via the WIFI networks (the specific meaning and the specific method of "the equipment identifiers of WIFIs or other wireless network access equipments are used to determine positions" involved in the present application can be determined by referring to the application titled "Systems and methods for applying and processing data tag carrier information" with the application number 201310460760.6), at the same time, the present invention also can use the 3G/4G base station positioning technology of the Mobile/Unicom/Telecom network, both of them can further be combined for use.

The application range of the present invention is relatively wide, for example, in a hypermarket or a shopping mall, each brand shop has a corresponding WIFI network and a corresponding piece of music/a corresponding song/a corresponding sound effect respectively. A costumer uses an intelligent terminal, runs a special App program to connect to the WIFI network, and obtains a VF electronic tag of one segment of the piece of music/the song/the sound effect through the mouthpiece/the microphone of the intelligent terminal, the VF electronic tag and the place/the position (WIFI) are combined and sent to the special defining and parsing server to parse, to obtain a corresponding data tag. The intelligent terminal of the costumer obtains the data tag corresponding to the site, the data tag pushes relevant information of the site to the App of the intelligent terminal, to be provided to the costumer to browse/operate.

In a fashion release show/a product release meeting, when a model wearing a displayed fashion performs onstage, each audience/customer uses his/her intelligent terminal, runs a special App program to connect to the WIFI network, and obtains a VF electronic tag of one segment of the piece of music/the song/the sound effect through the mouthpiece/the microphone of the intelligent terminal, the VF electronic tag and the place/the position (WIFI) are combined and sent to the special defining and parsing server to parse, to obtain a corresponding data tag. The intelligent terminal of the audience/the costumer obtains the data tag corresponding to the site, the data tag pushes relevant information of the site to the App of the intelligent terminal, to be provided to the audience/the costumer to browse/operate.

Of course, the applications of the present invention are not limited to the specific embodiments mentioned above, and obviously the present invention can also be used to introduce information such as show content, dialogue or lyrics to audience when a drama or a musical play is performed, or introduce scenic spot information, visiting route information, and so on to tourists by using a piece of background music and access point position information in a tourist attraction.

In the VF-based data tag release system and the VF-based data tag release method of the present invention, for the system comprises a VF processing equipment, a VF play equipment, a user terminal and a data tag server, a data tag or data tags corresponding to a piece of or pieces of information that need to be transmitted can be associated to a piece of or pieces of VF data through the VF processing equipment, then the associated VF data are played as a piece of background music through the VF play equipment, after a user identifies the piece of background music through the user terminal such as a mobile phone or a tablet PC, the user terminal VF data are sent to the VF processing equipment through a network, after the VF processing equipment searches a piece of or pieces of corresponding data tag information, the data tag server sends a data tag or data tags to the user terminal, the user terminal can further obtain data such as the product information corresponding to the data tag or the data tags. With the system and the method of the present invention, only if the associated VF data are played as a piece of background music, it enables the audience to obtain the product information intuitively, and at the same time does not prevent the audience from appreciating the performance; or enables the customer to obtain a lot of commodity information quickly, moreover, in the present invention, the VF-based data tag release system has a simple structure and a wide application range, the realization mode of the method is simple and convenient, and the realization cost is relatively low.

In the present specification, the present invention has been described with specific examples. However, it should be noted that various modifications and variations may be made without departing from the spirit and scope of the invention. Accordingly, the specification and drawings are to be regarded for illustrative rather than restrictive purposes.

## Claims

1. A VF-based data tag release system, comprising:
a VF processing equipment, used to define VF data according to a preset rule or preset rules, associate a part, some parts or all of the VF data to a piece of or pieces of preset data tag information, to form associated VF data, the VF processing equipment being further used to receive user terminal VF data, and search a piece of or pieces of data tag information associated to the received user terminal VF data according to the received user terminal VF data;
a VF play equipment, connected with the VF processing equipment, and used to read the associated VF data and output the associated VF data in a sound wave form;
a user terminal, including a microphone, a sound wave digitalizing processor connected with the microphone and a network module connected with the sound wave digitalizing processor, the microphone being used to receive the sound wave output from the VF play equipment, the sound wave digitalizing processor being used to convert the sound wave received by the microphone into digitalized user terminal VF data, the network module being connected with the VF processing equipment via a network, and sending the user terminal VF data to the VF processing equipment; the user terminal being further used to obtain data information corresponding to a data tag or data tags via the network according to the data tag or the data tags obtained;
a data tag server, connected with the VF processing equipment and the user terminal via the network respectively, used to send the corresponding data tag or the corresponding data tags to the user terminal according to the piece of or the pieces of data tag information received from the VF processing equipment.

2. The VF-based data tag release system of claim 1, wherein, the VF processing equipment includes:
a high VF processor, used to associate a piece of or pieces of high VF data that can not be heard by human ears to the piece of or the pieces of preset data tag information, the high VF processor being further used to receive the user terminal VF data, and search the piece of or the pieces of data tag information associated to the received user terminal VF data according to the received user terminal VF data;
a VF mixing processor, connected with the high VF processor, storing VF data that need to be played and can be heard by human ears, and used to mix the piece of or the pieces of high VF data that can not be heard by human ears with the VF data that need to be played and can be heard by human ears, to form the associated VF data.

3. The VF-based data tag release system of claim 2, wherein, the VF range of the high VF data that can not be heard by human ears is 16kHz to 20kHz.

4. The VF-based data tag release system of claim 2, wherein, the VFs of the pieces of high VF data that can not be heard by human ears are different.

5. The VF-based data tag release system of claim 1, wherein, the VF processing equipment includes:
a VF segmenting processor, storing VF data that need to be played, and used to segment the VF data and associate each segment of the VF data to the piece of or the pieces of preset data tag information, to form the associated VF data, the VF segmenting processor being further used to receive the user terminal VF data, and search the piece of or the pieces of data tag information associated to the received user terminal VF data according to the received user terminal VF data.

6. The VF-based data tag release system of claim 5, wherein, the VF segmenting processor segments the VF data according to the syllable(s) of the VF data.

7. The VF-based data tag release system of any one of claims 1-6, wherein, the system further comprises a wireless network access equipment, the wireless network access equipment is connected with the VF processing equipment, the user terminal and the data tag server through a wireless signal respectively.

8. The VF-based data tag release system of claim 7, wherein, the wireless network access equipment is a 2G/3G/4G wireless signal transceiver equipment, and the wireless signal is a 2G/3G/4G wireless signal.

9. The VF-based data tag release system of claim 7, wherein, the wireless network access equipment is a wireless router, and the wireless signal is a WIFI signal.

10. The VF-based data tag release system of claim 7, wherein, the wireless network access equipment has an equipment identifier indicating its position, the wireless network access equipment is used to send the user terminal VF data and the equipment identifier to the VF processing equipment after receiving the user terminal VF data;
the VF processing equipment further includes an equipment identifier parsing server, used to confirm whether the user terminal sending the user terminal VF data is connected with the wireless network access equipment connected with the VF processing equipment or not by parsing the equipment identifier, so as to determine the position of the user terminal, if yes, the VF processing equipment searches the piece of or the pieces of data tag information associated to the received user terminal VF data according to the received user terminal VF data.

11. The VF-based data tag release system of claim 1, wherein, the VF play equipment includes a power amplifier and an audible device, the input end of the power amplifier is connected with the output end of the VF processing equipment, the output end of the power amplifier is connected with the input end of the audible device.

12. A VF-based data tag release method implemented by using the system of claim 1, comprising the following steps:
(1) defining VF data according to a preset rule or preset rules, and associating a part, some parts or all of the VF data to a piece of or pieces of preset data tag information through the VF processing equipment, to form associated VF data;
(2) reading the associated VF data from the VF processing equipment, and outputting the associated VF data in a sound wave form through the VF play equipment;
(3) receiving the sound wave output from the VF play equipment through the microphone, and converting the sound wave received by the microphone into digitalized user terminal VF data through the sound wave digitalizing processor in the user terminal;
(4) sending the user terminal VF data to the VF processing equipment through the network module in the user terminal;
(5) searching a piece of or pieces of data tag information associated to the received user terminal VF data according to the received user terminal VF data, and sending the piece of or the pieces of data tag information to the data tag server through the VF processing equipment;
(6) sending a corresponding data tag or corresponding data tags to the user terminal through the data tag server according to the piece of or the pieces of data tag information received from the VF processing equipment;
(7) obtaining data information corresponding to the data tag or the data tags from a server corresponding to the data tag or the data tags via the network through the user terminal according to the data tag or the data tags obtained.

13. The VF-based data tag release method of claim 12, wherein, the VF processing equipment includes a high VF processor and a VF mixing processor, and the step (1) includes the following steps in details:
(11-1) associating a piece of or pieces of high VF data that can not be heard by human ears to the piece of or the pieces of preset data tag information through the high VF processor;
(11-2) mixing the piece of or the pieces of high VF data that can not be heard by human ears with the VF data that need to be played and can be heard by human ears through the VF mixing processor, to form the associated VF data.

14. The VF-based data tag release method of claim 13, wherein, the step (5) comprises the following step in details:
(51) searching the piece of or the pieces of data tag information associated to the received user terminal VF data according to the received user terminal VF data, and sending the piece of or the pieces of data tag information to the data tag server through the high VF processor.

15. The VF-based data tag release method of claim 13, wherein, the VF range of the high VF data that can not be heard by human ears is 16kHz to 20kHz.

16. The VF-based data tag release method of claim 13, wherein, the VFs of the pieces of high VF data that can not be heard by human ears are different.

17. The VF-based data tag release method of claim 12, wherein, the VF processing equipment includes a VF segmenting processor, and the step (1) includes the following step in details:
(12) segmenting the VF data that need to be played, and associating each segment of the VF data to the piece of or the pieces of preset data tag information through the VF segmenting processor, to form the associated VF data.

18. The VF-based data tag release method of claim 17, wherein, the step (5) comprises the following step in details:
(52) searching the piece of or the pieces of data tag information associated to the received user terminal VF data according to the received user terminal VF data, and sending the piece of or the pieces of data tag information to the data tag server through the VF segmenting processor.

19. The VF-based data tag release method of claim 17, wherein, the VF segmenting processor segments the VF data according to the syllable(s) of the VF data.

20. The VF-based data tag release method of any one of claims 12-19, wherein, the system further comprises a wireless network access equipment, the wireless network access equipment is connected with the VF processing equipment, the user terminal and the data tag server through a wireless signal respectively, and the step (4) includes the following step in details:
(41) sending the user terminal VF data to the VF processing equipment via the wireless network access equipment through the network module in the user terminal;
the step (6) includes the following step in details:
(61) sending the corresponding data tag or the corresponding data tags to the user terminal via the wireless network access equipment through the data tag server according to the piece of or the pieces of data tag information received from the VF processing equipment.

21. The VF-based data tag release method of claim 20, wherein, the wireless network access equipment has an equipment identifier indicating its position, the VF processing equipment further includes an equipment identifier parsing server, and the step (41) includes the following steps in details:
(41-1) sending the user terminal VF data and the equipment identifier to the VF processing equipment through the wireless network access equipment after receiving the user terminal VF data;
(41-2) judging whether the equipment identifier received is same to the equipment identifier of the wireless network access equipment connected with the VF processing equipment or not through the equipment identifier parsing server of the VF processing equipment, if yes, going to the step (5), if not, exiting the method.

22. The VF-based data tag release method of claim 12, wherein, the VF play equipment includes a power amplifier and an audible device, and the step (2) includes the following steps in details:
(2-1) reading the associated VF data from the VF processing equipment, and performing a power amplification process to the associated VF data through the power amplifier;
(2-2) outputting the associated VF data to which the power amplification process is performed in the sound wave form through the audible device.
